Europäisches Patentamt

(19) European Patent Office

Office européen des brevets

(11) Veröffentlichungsnummer: **0 057 774**
**B1**

(12) **EUROPÄISCHE PATENTSCHRIFT**

(45) Veröffentlichungstag der Patentschrift:
06.11.85

(51) Int. Cl.⁴: **B 60 K 5/12,** F 16 F 9/10

(21) Anmeldenummer: 81110834.9

(22) Anmeldetag: 29.12.81

(54) Dreikammerdämpfer.

(30) Priorität: 10.02.81 DE 3104708

(43) Veröffentlichungstag der Anmeldung:
18.08.82 Patentblatt 82/33

(45) Bekanntmachung des Hinweises auf die Patenterteilung:
06.11.85 Patentblatt 85/45

(84) Benannte Vertragsstaaten:
DE FR GB IT NL SE

(56) Entgegenhaltungen:
EP - A - 0 009 120
EP - A - 0 012 638
EP - A - 0 014 742
EP - A - 0 042 761
DE - A - 1 948 352
DE - A - 2 401 815
DE - A - 2 935 879
FR - A - 2 255 507
FR - A - 2 394 715
US - A - 2 535 080

ATZ AUT.TECHN. ZEITSCHRIFT, Band 81, Heft 10,
Oktober 1979, STUTTGART (DE) D. BOSENBERG et al.:
"Motorlagerungen im Fahrzeug mit integrierter
hydraulischer Dämpfung - ein Weg zur Verbesserung des
Fahrkomforts", Seiten 533-536 und 539

(73) Patentinhaber: WOCO Franz-Josef Wolf & Co.,
Sprudelallee 19, D-6483 Bad Soden-Salmünster (DE)

(72) Erfinder: Wolf, Franz Josef, Sprudelallee 19, D-6483 Bad
Soden-Salmünster (DE)
Erfinder: Pletsch, Hubert, Weinbergstrasse 37,
D-6943 Birkenau (DE)

(74) Vertreter: Jaeger, Klaus, Dr. et al, JAEGER & PARTNER
Patentanwälte Bergstrasse 48 1/2,
D-8035 München-Gauting (DE)

**Beschreibung**

Die Erfindung betrifft einen Dreikammerdämpfer der im Oberbegriff des Patentanspruchs 1 genannten Art.

Ein derartiger Dreikammerdämpfer ist aus der DE-A 2 401 815 bekannt. Dieser bekannte Mehrkammerdämpfer ist primär für eine Dämpfung axial auf den Mehrkammerdämpfer einwirkender Kräfte ausgelegt. Senkrecht oder schräg zur Achse des Mehrkammerdämpfers einwirkende Kräfte werden zum grössten Teil durch die relativ schmalen, radial aussenliegenden ersten und zweiten Kammern gedämpft, während die dritte Kammer nur indirekt durch entsprechenden Druckausgleich zwischen den entsprechenden radial aussenliegenden Kammern mit in die Dämpfungscharakteristik einbezogen wird.

Aufgrund der vollständigen Ummantelung des formstabilen Anschlussblocks wird bei diesem bekannten Mehrkammerdämpfer relativ viel Membranmaterial benötigt, so dass dieser Mehrkammerdämpfer vergleichsweise teuer in der Fertigung ist.

Der Erfindung liegt die Aufgabe zugrunde, einen Dreikammerdämpfer dahingehend zu verbessern, dass dieser mit einem relativ geringen Membrankörper auskommt und bei senkrecht oder schräg zur Achse des Dreikammerdämpfers einwirkenden zu dämpfenden Kräften, d.h. senkrecht bzw. quer zur Achse des Anschlussblockes wirkenden Kräften, die axiale (dritte) Kammer unmittelbar in die Dämpfungscharakteristik des Dreikammerdämpfers mit einbezogen wird.

Zur Lösung dieser Aufgabe schafft die Erfindung einen Dreikammerdämpfer der eingangs genannten Art, der erfindungsgemäss die im kennzeichnenden Teil des Patentanspruchs 1 genannten Merkmale aufweist.

Die Erfindung schafft also einen hydraulischen Dreikammerdämpfer mit einem Anschlussblock, der stirnseitig zur Hauptkammer oder dritten Kammer eine Vertiefung aufweist, die einen Teil der insgesamt im Axialschnitt gesehen pilzförmigen Hauptkammer mitbildet. Hierbei sind die funktionswesentlichen Drosselöffnungen nicht allein im Membrankörper vorgesehen, sondern im Anschlussblock, und zwar im Bereich der Vertiefung, so dass gerade bei senkrecht oder quer zur Achse des Anschlussblockes wirkenden Kräften der in der Hauptkammer vorhandene Hydraulikdruck unmittelbar auf die zylindrische Innenwandung der Vertiefung wirken kann.

Bei rein axial auf den Dreikammerdämpfer einwirkenden Kräften wird durch die Erweiterung der dritten Kammer mit der Vertiefung eine Art Führung für den Anschlussblock erreicht, die zusätzlich durch den radialen Druckausgleich über die Drosselöffnungen noch stabilisiert wird, so dass eine Art Schwimmbewegung in radialer Richtung bei axialer Kraftbeaufschlagung verhindert wird.

Vorzugsweise besteht das Dämpfergehäuse aus Stahl, insbesondere einem einseitig durch einen Kapseldeckel verschlossenen Stahlstutzen, und der Membrankörper aus einem Elastomer, in dem zentral ein formstabiler Anschlussblock zum Anschliessen des zweiten Konstruktionselements eingeschlossen ist. Vorzugsweise besteht auch der Anschlussblock aus Stahl. Das Einschliessen dieses Anschlussblocks in den Elastomermembrankörper erfolgt vorzugsweise in der Weise, dass der Anschlussblock in den Membrankörper einvulkanisiert wird.

Weiterhin ist der Membrankörper vorzugsweise so dimensioniert, dass seine elastische Dämpfungscharakteristik merklich in die resultierende Dämpfungscharakteristik des Dreikammerdämpfers mit eingeht. Mit anderen Worten, der Dreikammerdämpfer ist vorzugsweise nicht als reiner hydraulischer Dämpfer, sondern als Kombinationsdämpfer aus einem hydraulischen Dämpfungssystem und einem federelastischen oder gummielastischen Dämpfer ausgebildet. Dabei geht die federelastische oder gummielastische Dämpfungscharakteristik des Membrankörpers in die Gesamtcharakteristik um so stärker ein, je stärker die Membranwände ausgebildet sind und je grösser die Querschnitte der Drosselkanäle, die die drei hydraulischen Kammern miteinander verbinden, ausgelegt sind.

Die drei hydraulisch miteinander verbundenen Kammern sind vorzugsweise so angeordnet, dass eine Kammer über dem Angriffspunkt des am Membrankörper befestigten Konstruktionselements liegt, dass die zweite hydraulische Kammer unterhalb dieses Angriffspunktes und die dritte Kammer symmetrisch zu den beiden ersten Kammern hinter dem von aussen in das Gehäuse eingreifenden Anschluss dieses Konstruktionselements liegt. Bereits bei einer solchen relativ einfachen Kammeranordnung wird eine optimale dreidimensionale Dämpfung erzielt.

Die an der Stirnseite des Anschlussblockes in diesen hinein ausgebildete Vertiefung, die den Erweiterungsteil einer hydraulischen Kammer darstellt, ist an ihrem Umfangsrand in eine Art Ringwulst in den Membrankörper einvulkanisiert. In der die stirnseitige Vertiefung des Anschlussblockes umschliessende Rundung ist zu der jeweils radial nach aussen angeordneten hydraulischen Kammer mindestens eine durchgehende Bohrung vorgesehen, die mit entsprechenden Öffnungen in den im Umfangsbereich vorgesehenen Kammern ausgerichtet sind. Die in den erweiterten Teil der Kammer mündenden Bohrungen können einerseits im Nahbereich der Bodenfläche der Vertiefung vorgesehen sein, wobei die Bodenfläche dann eine einseitige Kanalführung darstellt. In einer anderen Ausführungsform können diese Bohrungen jedoch auch zum stirnseitigen Umfangsrand versetzt sein bzw. einen grösseren Abstand zum Boden der Vertiefung aufweisen als zum Umfangsrand.

Die Anbringung der in die stirnseitige Vertiefung des Anschlussblockes mündenden Bohrungen und damit der entsprechenden Öffnungen zu den hydraulischen Kammern wird vorzugsweise diametral gegenüberliegend ausgeführt. Bei mehreren Bohrungen und Öffnungen für die jeweilige Kammer kann auch eine symmetrische oder konstruktiv bedingte Versetzung dieser Bohrungen vorgesehen werden. Sofern die Krafteinwirkung aus bestimmten Vorzugsrichtungen erfolgt und die Anbringung des Dreikammerdämpfers festliegt, kann eine gegenüber einer diametralen Anordnung vorgesehene versetzte Anordnung der Bohrungen, auch bei zwei Bohrungen, vorteilhafte Dämpfungscharakteristiken erbringen.

Neben einer radialen versetzten Anordnung der Bohrungen, die in die Vertiefung des Anschlussblockes münden, kann auch eine Versetzung dieser Bohrungen in axialer Richtung des Anschlussblockes gegeneinander zur Erreichung gewünschter Dämpfungscharakteristiken gewählt werden. Durch die letztgenannte Versetzung der Bohrungen, die gegebenenfalls mit einer entsprechenden axialen Länge der Vertiefung kombiniert wird, können in dem Erweiterungsbereich der zentral vorgesehenen hydraulischen Kammer Dämpfungen erreicht werden.

Veränderte Dämpfungscharakteristiken lassen sich jedoch auch durch entsprechende Durchmesser der in den Erweiterungsteil mündenden Bohrungen und den damit fluchtenden Öffnungen der Kammern erreichen. Als abgewandelte Ausführungsform können die in der Wandung der vorzugsweise zylindrischen Vertiefung vorgesehenen Bohrungen auch in einer zum Hauptteil der hydraulischen Kammer zeigenden Richtung, also ausserhalb der Senkrechten zur Achse des Anschlussblockes, vorgesehen sein. Hierdurch würde hydraulisches Medium zunächst in Richtung zur Hauptkammer gedrückt, wobei ein anderer, nahezu ruhender Volumenbereich des hydraulischen Mediums in die komplementäre Kammer gedrückt würde.

Das Dreikammerdämpfungselement der Erfindung wird vorzugsweise im Kraftfahrzeugbau verwendet, und zwar als Dämpfungselement für die Motoraufhängung.

Die Erfindung ist im folgenden anhand zweier Ausführungsbeispiele in Verbindung mit den Zeichnungen näher erläutert. Es zeigen:

Fig. 1 ein Ausführungsbeispiel des Dreikammerdämpfers im Axialschnitt;
Fig. 2 einen Schnitt nach B–B in Fig. 1.

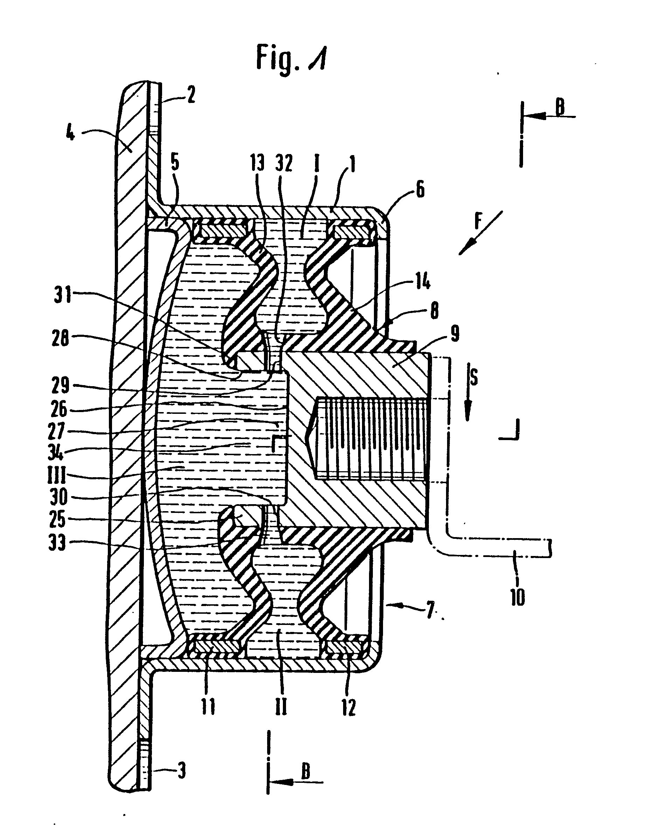

Das im schematischen Axialschnitt in der Fig. 1 dargestellte Ausführungsbeispiel des Dreikammerdämpfers der Erfindung besteht aus einem Gehäuse 1, das formschlüssig, beispielsweise durch in der Figur nicht dargestellte Schraubbolzen, die durch Bohrungen 2, 3 hindurchgreifen, mit einem ersten Konstruktionselement 4 verbunden ist. Das Gehäuse 1 besteht aus Stahlblech und ist als Stutzen ausgebildet, der bodenseitig durch einen Deckeleinsatz 5 hydraulisch dicht verschlossen ist. Der öffnungsseitige Rand 6 des das Gehäuse 1 bildenden Stahlstutzens ist nach radial innen eingebördelt, so dass das Gehäuse 1 eine relativ grosse kreisrund offene Stirnseite 7 aufweist.

Im Inneren des Gehäuses 1 ist ein Membrankörper 8 angeordnet, der im grossen und ganzen angenähert die Form eines mit einer Felge versehenen Rades aufweist. Das Mittelteil des Membrankörpers 8 ist nach Art einer Nabe ausgebildet, die einen einvulkanisierten Anschlusslock 9 für das schematisch angedeutete zweite Konsturktionselement 10 aufweist, das beispielsweise ebenfalls durch eine Schraubverbindung mit dem Anschlussblock 9 des Membrankörpers 8 formschlüssig verbunden werden kann. Der Anschlussblock 9 besteht ebenfalls aus Stahl.

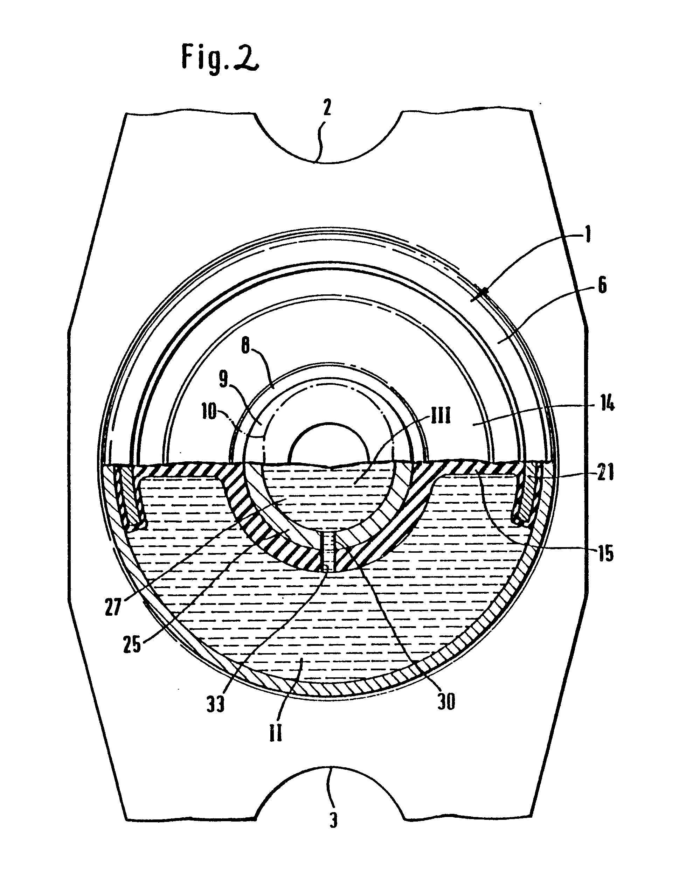

In den beiden kreisförmigen Aussenrändern des felgenartigen Membrankörpers 8 sind Stahlringe 11, 12 einvulkanisiert, die den Membrankörper 8 hydraulisch dicht an die Innenwand des Stahlgehäuses 1 anschliessen. Der zwischen den beiden kreisringförmigen Abschnitten 13, 14 des Membrankörpers 8 gebildete hydraulisch dichte Ringraum ist durch eine querliegende Trennmembran 15 (Fig. 2) in eine obere erste hydraulische Kammer 1 und eine untere zweite hydraulische Kammer II unterteilt. Eine dritte hydraulische Kammer III ist zwischen dem rückwärtigen Abschntit 13 des Membrankörpers und der Bodenkapsel 5 des Gehäuses 1 gebildet. Diese Abschnitte 13 und 14 sind im mittleren Bereich des Radialschnittes durch die Kammer I bzw. II leicht zueinanderweisend ausgebildet, so dass die jeweilige hydraulische Kammer I oder II in der Mitte eine Verengung erfährt. Nach radial auswärts wird die jeweilige Kammer I bzw. II durch die Innenwand des Gehäuses 1 begrenzt.

Der Anschlussblock 9 weist in Richtung zur hydraulischen Kammer III eine in seiner Stirnseite z.B. durch Bohren oder Ausfräsen eingebrachte Vertiefung 27 auf. Diese zylindrische Vertiefung 27 erstreckt sich soweit in den Anschlussblock 9 hinein, dass die in der hydraulischen Kammer I und in der komplementären Kammer II vorgesehene Öffnung 32 bzw. 33 mit in dem Anschlussblock 9 vorzugsweise radial vorgesehenen Bohrungen 29 bzw. 30 fluchten. Die Bohrungen 29 und 30 münden in einen Teil 34 der hydraulischen Kammer III, der durch die Vertiefung 27 gebildet ist.

Entsprechend dieser konstruktiven Gestaltung des Anschlussblockes 9 ist der elastische Membrankörper 8 im Sinne einer auf einer Welle angebrachten radialen Kammereinrichtung zu verstehen. Die Welle ist dabei durch den Anschlussblock 9 gebildet. Die Vertiefung 27 an der Stirnseite des Anschlussblockes 9 wird durch einen kreisförmigen Umfangsrand 25 gegenüber dem Membrankörper 8 und der hydraulischen Kammer III begrenzt. Die zylindrische Vertiefung ist in Richtung zum Anbringungspunkt mit dem weiteren Konstruktionselement 10 von einer kreisförmigen Bodenfläche 26 begrenzt. Die durch die Wandung 28 der Vertiefung 27 hindurchgehenden Bohrungen 29 bzw. 30 stehen nach radial auswärts mit den hydraulischen Kammern I bzw. II und nach radial innen mit dem Teil 34 der Kammer III in Fluidverbindung. Der stirnseitige Umfangsrand des Anschlussblockes 9 wird vom Membrankörper 8 mit einer Randwulst 31 umschlossen. Der Randwulst 31 bildet einen abgerundeten Bereich, der abhängig von konstruktiven Erfordernissen auch in die Vertiefung 27, z.B. bis zu den Bohrungen 29 bzw. 30, hineinreichen kann.

Die hydraulische Kammer III bildet im wesentlichen eine «Pilzform», wobei die «Pilzkappe» der Kammer III auf Seiten der Bodenkapsel 5 des Gehäuses 1 gelegen ist, während der «Pilzstiel» in die Vertiefung 27 des Anschlussblocks 9 hineinragt. Die Gegenfläche der hydraulischen Kammer III wird daher durch die leicht nach aussen gewölbte Innenwandung des Deckeleinsatzes 5 gebildet, der mit seinem mittleren Bereich und seinen Aussenbereichen an dem Konstruktionselement 4 anliegen kann. Die kreisförmigen Stahlringe 11 und 12 des Dreikammerdämpfers, die den elastischen Membrankörper 8 fluiddicht gegen die Innenwandung des Gehäuses 1 pressen, sind in axialer Richtung des Anschlussblocks 9 durch stegartige Querverbindungen 21, die im Bereich der Trennmembran 15 einvulkanisiert sind, versteift.

Die zur Füllung des aus den drei hydraulischen Kammern I, II und III gebildeten hydraulischen Dämpfungssystems verwendete hydraulische Flüssigkeit kann prinzipiell beliebiger Art sein und ist vorzugsweise ein Glykolgemisch.

Die Funktionsweise des Dreikammerdämpfers sei unter Berücksichtigung einer etwa senkrecht zur Achse des Anschlussblockes 9 einwirkenden Kraft S betrachtet. Die Kraftübertragung findet dabei vom Konstruktionselement 10 auf den Anschlussblock 9 und nachfolgend auf den elastischen Membrankörper 8 und das Hydraulikmedium in den Kammern I, II und im wesentlichen im Teil 34 der Kammer III statt. Das bei der in Pfeilrichtung einwirkenden Kraft S aus der hydraulischen Kammer II verdrängte Hydraulikmedium wird durch die Öffnung 33 und die Bohrung 30 im Anschlussblock 9 zunächst gegen das hydraulische Medium im zylindrischen Raum des Teiles 34 der Kammer II gedrückt. Bereits in diesem Teil 34 findet eine Dämpfung statt, wobei erst nachfolgend eine Volumenveränderung durch die Bohrung 29 und die damit ausgerichtete Öffnung 32 der hydraulischen Kammer I erfolgt.

In ähnlicher Weise erfahren auch die Kräfte in der Richtung F eine günstigere Dämpfungscharakteristik, da die zusätzlichen Flächenbereiche vor allen Dingen an der Innenumfangswand des Umfangsrandes 25 Kraftänderungen auf das Hydraulikmedium in der Kammer III übertragen können.

**Patentansprüche**

1. Dreikammerdämpfer zur Stoss- und Schwingungsdämpfung zwischen zwei Konstruktionselementen (4, 10), insbesondere für Motoraufhängungen in Kraftfahrzeugen, mit einem einseitig offenen Gehäuse (1), das mit einem ersten der zwei Konstruktionselemente (4) formschlüssig verbindbar ist, mit einem elastischen Membrankörper (8), der in dem Gehäuse (1) ein abgeschlossenes System von drei hydraulischen Kammern (I, II, III) definiert, die durch Drosselöffnungen (32, 33) hydraulisch miteinander verbunden sind, mit einem formstabilen, zentral im Membrankörper (8) vorgesehenen Anschlussblock (9), der formschlüssig durch die offene Seite (7) des Gehäuses (1) hindurch mit dem zweiten Konstruktionselement (10) verbindbar ist, wobei zwei hydraulische Kammern (I, II) über die dritte Kammer (III) miteinander in Hydraulikverbindung stehen, dadurch gekennzeichnet, dass der Anschlussblock (9) stirnseitig eine Vertiefung (27) aufweist, die einen Teil (34) der dritten hydraulischen Kammer (III) bildet, so dass die Kammer (III) im Axialschnitt etwa Pilzform aufweist und dass die Drosselöffnungen (32, 33) im Bereich der Vertiefung (27) im Anschlussblock (9) ausgebildet sind.

2. Dreikammerdämpfer nach Anspruch 1, dadurch gekennzeichnet, dass eine erste hydraulische Kammer (I) über den Anschlussblock, eine zweite hydraulische Kammer (II) unter dem Anschlussblock und die dritte hydraulische Kammer (III) an der vom zweiten Konstruktionselement abgewandten Seite des Anschlussblockes stirnseitig an den Anschlussblock (9) angrenzend angeordnet sind.

3. Dreikammerdämpfer nach einem der Ansprüche 1 oder 2, dadurch gekennzeichnet, dass die Drosselöffnungen (32, 33) diametral gegenüberliegend angeordnet sind und jede für sich mit der Kammer (III) in Verbindung steht.

4. Dreikammerdämpfer nach einem der Ansprüche 1 bis 3, dadurch gekennzeichnet, dass der Anschlussblock (9) in den Membrankörper (8) einvulkanisiert ist.

5. Dreikammerdämpfer nach einem der Ansprüche 1 bis 4, dadurch gekennzeichnet, dass das Gehäuse (1) aus Stahl und der Membrankörper (8) aus einem Elastomer besteht.

**Claims**

1. A damper for dampening shock and vibration between two structural members (4,10), in particular appropriate for motor suspension in motor cars, including a housing (1) open to one side which can be joined to a first structural member (4) of the two structural members to establish a positive connection further including a flexible membrane body (8) defining in the housing (1) a closed system of three hydraulic chambers (I, II, III) which are hydraulically interconnected by throttle openings (32, 33), further including a non-flexible block element (9) which is located centrally in the membrane body (8) and which can be joined through the open side (7) of the housing (1) to the second element of construction (10) to establish a positive connection, to hydraulic chambers (I, II, III) being hydraulically interconnected via the third chamber (III), which comprises on its front side the block element (9) showing a recess (27) which forms a part (34) of the third hydraulic chamber (III) in such a manner that in axial section the chamber (III) shows the form of a fungus and that the throttle openings (32, 33) are provided within the range of the deepening (27) in the block element (9).

2. A damper with three chambers according to claim 1 wherein a first hydraulic chamber (I) is arranged over said block element, the second hydraulic chamber (II) is arranged below said block element and the third hydraulic chamber (III) is arranged in such a manner that the chamber (III) faces the front side of said block element opposite the side to which said other structural member is affixed.

3. A damper with three chambers according to one of the claims 1 or 2, wherein the throttle openings (32, 33) are arranged diametrically opposite and wherein each of them is interconnected to the chamber (III).

4. A damper with three chambers according to one of the claims 1 to 3, wherein the block element (9) is vulcanized to the membrane body (8).

5. A damper with three chambers according to one of the claims 1 to 4, wherein the housing (1) is made of steel and the membrane body (8) is made of an elastomer.

**Revendications**

1. Amortisseur à trois chambres pour l'amortissement des chocs et des vibrations entre deux éléments de construction (4, 10), notamment dans les suspensions de véhicules automobiles, qui comprend: une enveloppe (1), qui est ouverte d'un côté et peut être reliée, avec adaptation des formes, au premier (4) des deux éléments de construction; un corps de membrane élastique (8), qui délimite dans l'enveloppe (1) un système fermé de trois chambres hydrauliques (I, II, III) reliées hydrauliquement les unes aux autres par des orifices d'étranglement (32, 33); un block de liaison (9), de forme immuable, qui est situé au centre du corps de membrane (8) et qui peut être relié, avec adaptation des formes, à travers le côté ouvert (7) de l'enveloppe (1) au deuxième élément (10) de construction, dans des chambres hydrauliques (I, II) en communication hydraulique l'une avec l'autre par l'intermédiaire de la troisième (III), caractérisé en ce que le bloc de liaison (9) comporte, du côté frontal, une partie rentrante (27) qui constitue une partie (34) de la troisième chambre hydraulique (III), de sorte qu'en coupe axiale cette chambre (III) a approximativement une forme de champignon et en ce que les orifices d'étranglement (32, 33) sont, dans la zone de la partie rentrante (27), ménagés dans le bloc de liaison (9).

2. Amortisseur à trois chambres selon la revendication 1, caractérisé en ce qu'une première chambre hydraulique (I) se trouve au-dessus du bloc de liaison, qu'une deuxième chambre hydradulique (II) se trouve au-dessus du bloc de liaison et que la troisième chambre hydraulique (III) se trouve du côté du bloc de liaison qui est opposé au deuxième élément de construction, du côté frontal, et contiguë au bloc de liaison (9).

3. Amortisseur à trois chambres selon l'une des revendications 1 ou 2, caractérisé en ce que les orifices d'étranglement (32, 33) sont diamétralement opposés et que chacun d'eux est individuellement en communication avec la chambre (III).

4. Amortisseur à trois chambres selon l'une des revendications 1 à 3, caractérisé en ce que le bloc de liaison (9) est inséré par vulcanisation dans le corps de membrane (8).

5. Amortisseur à trois chambres selon l'une des revendications 1 à 4, caractérisé en ce que l'enveloppe (1) est en acier et que le corps de membrane (8) est constitué par un élastomère.

# Fig. 1

## Fig.2